Europäisches Patentamt

(19) European Patent Office

Office européen des brevets

(11) Publication number: **0 015 327**
**B1**

(12) **EUROPEAN PATENT SPECIFICATION**

(45) Date of publication of patent specification: **03.11.82**

(51) Int. Cl.³: **B 23 Q 3/06, B 23 B 31/40**

(21) Application number: **79200795.7**

(22) Date of filing: **21.12.79**

(54) Mechanical clamping device.

(30) Priority: **05.03.79 NL 7901723**

(43) Date of publication of application:
**17.09.80 Bulletin 80/19**

(45) Publication of the grant of the patent:
**03.11.82 Bulletin 82/44**

(84) Designated Contracting States:
**AT BE CH DE FR GB IT LU NL SE**

(56) References cited:
**FR - A - 1 332 878**
**GB - A - 825 877**

(73) Proprietor: **Poot, Pieter**
**Termijen 7**
**NL-1852 TA Heiloo (NL)**

(72) Inventor: **Poot, Pieter**
**Termijen 7**
**NL-1852 TA Heiloo (NL)**

Courier Press, Leamington Spa, England.

## Mechanical clamping device

The invention relates to a mechanical clamping device comprising an axially movable conical wall, two converging surfaces of revolution, the wall and surfaces being concentric, and bodies of revolution, each of which are in contact with the wall and both surfaces, so that when the wall is axially moved the bodies of revolution are forced between the two surfaces which thereby are spread apart.

With existing mechanical clamping devices the workpiece or tool is pre-clamped with a screw spindle and nut with a coarse pitch to enable fast axial displacement. Clamping with high clamping force is here only possible by means of big levers, by which high friction of the screw thread has to be overcome and the spindle is subjected to high torsional stresses. Existing mechanical clamping devices are therefore constructed with a pre-clamping device and a device for clamping with high forces. In vices the jaws are brought against the workpiece by a screw spindle, after this, a mechanism starts working for clamping with high force. Here use is made of a set of toggle joint levers, which are driven by means of an auxilliary spindle, through which high clamping forces are created. With clamping nuts for clamping of workpieces and tools on shafts, the screw thread connection is use to clamp, while in the nuts toggle joint levers are installed, which can be turned to the so called "dead-position", by which high clamping forces are created. A disadvantage of toggle joint lever systems is, that it is impossible to obtain the desired clamping force by measuring the input force, as both forces are independent of each other. By this the danger is created that the clamping force is too big or too small, by which the workpiece deforms or loosens itself during machining. Another disadvantage of the toggle joint system is that it requires a lot of space and consequently a compact design is impossible. The number of toggle joint levers is restricted due to the available space, and therefore a high clamping force is only applied through a limited number of places and consequently unequal clamping takes place.

The invention aims in the first place to produce a compact and simple clamping device of the type as mentioned in the beginning, by which the aforementioned disadvantages are eliminated and the actual clamping force is in proportion to the input force, by which at the same time an equal transmission of forces takes place and of which the clamping elements are simple to install in all kinds of clamping devices.

French patent 1.332.878 discloses a mechanical clamping device of the type as mentioned in the beginning. The conical wall is axially movable by a piston-cylinder assembly resulting in an actual clamping force in proportion to the input force but too in an almost sliding displacement of the bodies of revolution on the contacting surfaces and consequently in a considerable wear of the contacting parts, partly as a result of a lack of efficient lubrication. Moreover, the piston-cylinder assembly is complex and expensive and needs a large space to be built in.

Object of the invention is a clamping device of the aforementioned type which eliminates the described disadvantages by increasing the efficiency of the clamp and reducing the dimensions of the device.

According to the invention this is achieved by moving the conical wall axially along a helical path so as to rotate the bodies of revolution when they are forced between the two converging surfaces.

For explanation of the invention and with reference to the drawing, the operation and some examples of execution will be described.

Fig. 1. Scheme of operation, with bodies of revolution outside the conical wall.

Fig. 2. Scheme of operation, with bodies of revolution inside the conical wall.

Fig. 3. Example of execution of clamping nut.

Fig. 4. Example of execution of clamping spindle.

Fig. 5. Example of execution of clamping and aligning spindle for a chuck.

Fig. 6. Cross section of bodies of revolution 12 of Fig. 1.

Fig. 7. Cross section of bodies of revolution 22 of Fig. 2.

In all figures the section drawn at the right hand side of the centerline is the unclamped position and at the left hand side the clamped position.

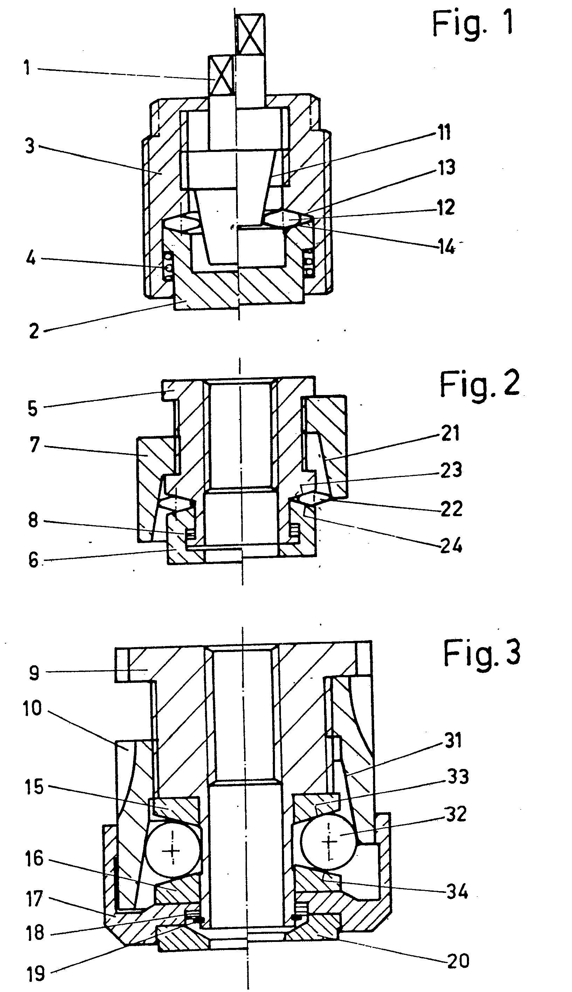

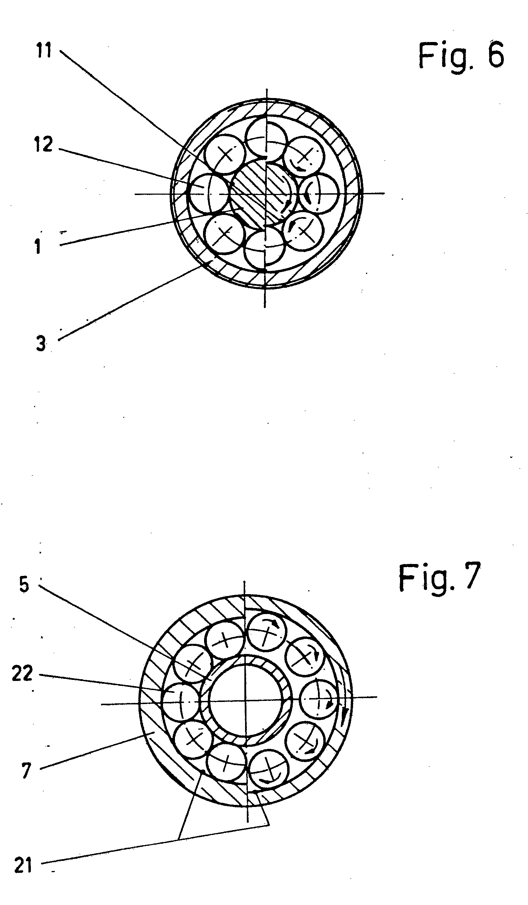

In fig. 1 and fig. 6, conical wall 11 will make an axial and helical rotary movement by turning the screw spindle down, by which the bodies of revolution 12 thrusting there against will rotate to a larger circle of centre between the surfaces of revolution 13 and 14, by which these move away of each other and thrust piece 2 moves away with respect to spindle carrier 3. By turning upwards screw spindle 1 the bodies of revolution 12 are pressed by the present forces of clamping and/or spring 4, via the surfaces 13 and 14 against wall 11 and rotated to a smaller circle of centre. The size of the angles between wall 11 and surfaces 13 and 14 determines the ratio of transmission to obtain high clamping forces. By the rolling movements of the bodies of revolution this clamping device has a high degree of efficiency. With a straight rotating line of wall 11 the input force is directly proportional to the clamping force while with a curved or/and broken rotating line the ratio of force transmission is not constant. The bodies of revolution 12 are positioned in such a way that they touch each other on the smallest circle of centre, by this a great number of equally distributed thrust surfaces are available for equal clamping.

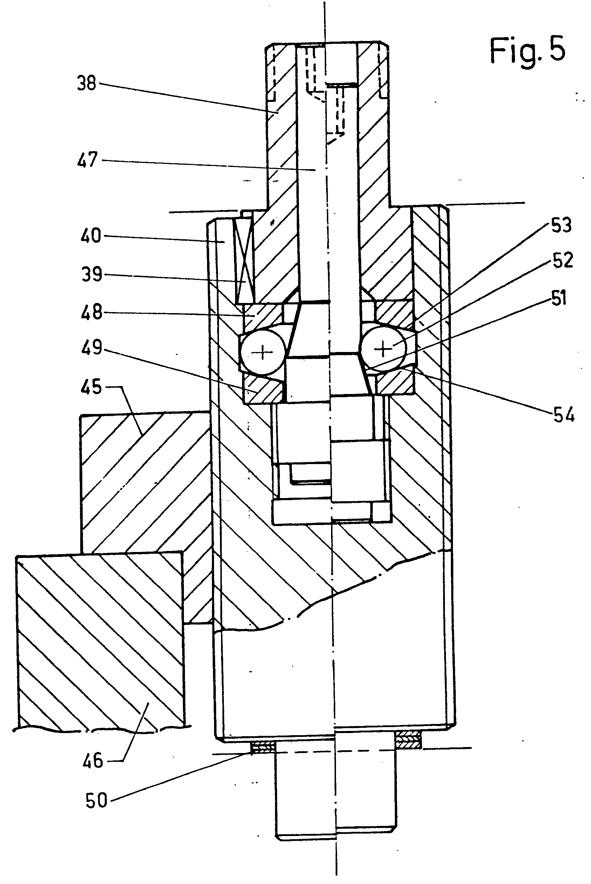

In fig. 2 and fig. 7 the bodies of rotation 22 are positioned inside the conical wall 21. Nut 5 is turned on a shaft until the underside of thrust ring 6 presses on the piece to be clamped. By turning clamping nut 7 downwards, the conical wall 21 executes a helical rotary and axial movement, by which the bodies of rotation 22 move to a smaller circle of centre between the surfaces 23 and 24, by which these move away from each other and thrust ring 6 moves away with respect to nut 5. By turning upwards the clamping nut 7 the bodies of revolution 22 are pressed against wall 21 by the clamping forces produced and/or by springs 8 via surfaces 23 and 24 and are moved to a larger circle of centre. For the transmission ratio and the distribution of forces the same is valid as described at fig. 1 and fig. 5.

Fig. 3 is an example of execution of fig. 2, in which the bodies of revolution 32 are executed in a ball shape. Nut 9 serves for pre-clamping, while clamping nut 10, with conical wall 31, serves to turn the bodies of revolution between the surface 33 and 34 of the rings 15 and 16. The rings 15 and 16, balls 32, bushing 17 and spring rings 18 are fitted to nut 9 by retaining ring 19. Thrust washer 20 is pressed in bushing 17.

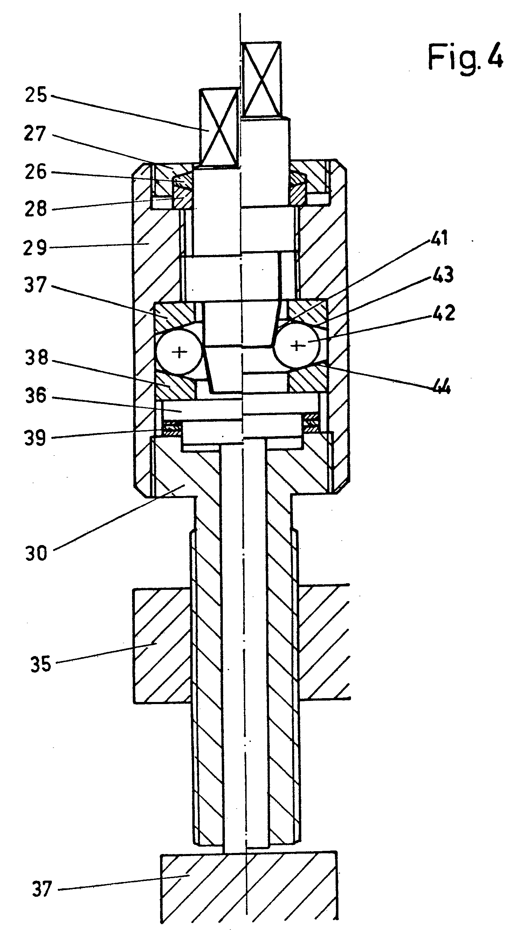

Fig. 4 is an example of execution of fig. 1, in which the bodies of revolution 42, are executed in a ball shape. By turning clamping spindle 25, via clamped friction ring 26 between nut 27 and ring 28, housing 29 with locked spindle 30 will be moved downwards in nut 35, until thrust pin 36 stops against workpiece 37. By this, clamping spindle 25 slips in friction ring 26 and turns downwards by the screw thread in housing 29, by which conical wall 41 turns the bodies of revolution 42 between the surfaces 43 and 44, of rings 37 and 38, by which an axial displacement take places and ring 38, thrust pin 36, against the pressure of auxilliary springs 39, presses against workpiece 37.

Fig. 5 is an example of execution of a clamping and aligning spindle for a chuck. By turning spindle 38, screw spindle 40 is turned via key 39, by which jaw 45 pre-clamps workpiece 46. By turning upwards clamping spindle 47, the ball shaped bodies of revolution 52 are rotated by the conical wall 51, between the surfaces 53 and 54 of rings 48 and 49, by which these are displaced axially with respect to each other. Ring 49 is displaced downwards with spindle 40 and jaw 45, against the pressure of springs 50, by which workpiece 46 becomes clamped with a high force. With this clamping system very small axial displacements can be carried out, as well as permitting for accurate aligning and positioning of workpieces.

## Claims

1. A mechanical clamping device comprising an axially movable conical wall (11; 21; 31; 41; 51), two converging surfaces of revolution (13, 14; 23, 24; 33, 34; 43, 44; 53, 54), the wall and surfaces being concentric, and bodies of revolution (12, 22; 32; 42; 52) each of which are in contact with the wall and both surfaces, so that when the wall is axially moved the bodies of revolution are forced between the two surfaces which are thereby spread apart, characterized in that the conical wall (11; 21; 31; 41; 51) is moved along a helical path so as to rotate the bodies of revolution (12; 22; 32; 42; 52) when they are forced between the two converging surfaces (13, 14; 23, 24; 33, 34; 43, 44; 53, 54).

2. A mechanical clamping device according to claim 1, characterized in that the bodies of revolution (12; 42; 52) are positioned outside the conical wall (11; 41; 51).

## Revendications

1. Dispositif de serrage mécanique comprenant une paroi conique et mobile dans le sens axial (11, 21, 31, 41, 51), deux surfaces de révolution convergentes (13, 14, 23, 24, 33, 34, 43, 44, 53, 54), la paroi et les surfaces étant concentriques, ainsi que des corps de révolution (12, 22, 32, 42, 52) qui sont chacun en contact avec la paroi et les deux surfaces, de telle manière que les corps de révolution, lorsque la paroi effectue un déplacement axial, sont serrés entre les deux surfaces qui s'écartent l'une de l'autre, l'ément caractéristique étant que la paroi conique (11, 21, 31, 41, 51) effectue un déplacement hélicoïdal pour imprimer une rotation aux corps de révolution (12, 22, 32, 42, 52) lorsque ceux-ci sont serrés entre les deux surfaces convergentes (13, 14, 23, 24, 33, 34, 43, 44, 53, 54).

2. Dispositif de serrage mécanique selon la revendication 1, caractérisé par le fait que les corps de révolution (12, 42, 52) sont placés à l'extérieur de la paroi conique (11, 41, 51).

## Patentansprüche

1. Eine mechanische Spannvorrichtung aus einer axial beweglichen kegelförmigen Wand (11; 21; 31; 41; 51), zwei aufeinanderzulaufenden Rotationsflächen (13; 14; 23; 24; 33; 34; 43; 44; 53; 54), — Wand und Flächen konzentrisch — und Rotationskörpern (12; 22; 32; 42; 52), die jeweils mit der Wand und den beiden Flächen in Berührung sind, so daß die Rotationskörper, wenn die Wand in axialer Richtung bewegt wird, zwischen die beiden Flächen gepreßt werden, die dadurch auseinandergetrieben werden, durch die kegelförmige Wand (11; 21; 31; 41; 51) gekennzeichnet, die laut einem schraubenförmigen Weg bewegt wird, um die Rotationskörper (12; 22; 32; 42; 52) drehen zu können, wenn diese zwischen die beiden aufeinanderzulaufenden Flächen (13; 14; 23; 24; 33; 34; 43; 44; 53; 54) gepreßt werden.

2. Eine mechanische Spannvorrichtung laut Anspruch 1, mit dem Merkmal, daß die Rotationskörper (12; 42; 52) außerhalb der kegelförmigen Wand (11; 41; 51) angebracht sind.

Fig. 1

Fig. 2

Fig. 3

**0 015 327**

Fig. 4

Fig. 5

Fig. 6

11
12
1
3

Fig. 7

5
22
7
21